# EUROPEAN PATENT APPLICATION

(11) **EP 4 776 214 A1**
(43) Date of publication of application: **15.07.2026**
(21) Application number: 23951592.7
(22) Date of filing: 07.09.2023
(51) Int. Cl.: G06Q 50/04, G06Q 30/06, G06K 19/06

(54) **CUSTOMIZED COSMETICS PRODUCTION EQUIPMENT**

(71) Applicant: Cosmax, Inc., Hwaseong-si, Gyeonggi-do 18622 (KR)
(72) Inventor: PARK, Jin Wook, Hwaseong-si, Gyeonggi-do 18321 (KR); SUNG, Si Keong, Seongnam-si, Gyeonggi-do 13356 (KR); PARK, Chun Ho, Seongnam-si, Gyeonggi-do 13483 (KR); SIM, Kyu Cheol, Hwaseong-si, Gyeonggi-do 18596 (KR); JEON, Myeong Won, Hwaseong-si, Gyeonggi-do 18416 (KR); KWON, Jin Gu, Suwon-si, Gyeonggi-do 16635 (KR)
(74) Representative: Mammel und Maser Patentanwälte PartG mbB
(86) International application number: PCT/KR2023/013450
(87) International publication number: WO 2025/053306

(57) **Abstract**

The present invention relates to equipment capable of automatically producing customized cosmetics of various formulations, comprising: transfer equipment for transferring cosmetic containers; filling equipment including a plurality of replaceable cartridges, and filling the cosmetic container with customized cosmetic raw materials of various formulations by using the plurality of cartridges; and packaging equipment, which caps the filled cosmetic containers so as to produce the customized cosmetics of various formulations.

## Description

### [Technical Field]

The present disclosure relates to customized cosmetics production equipment and, more specifically, to equipment capable of producing customized cosmetics of various formulations using a single piece of filling equipment.

### [Background Art]

Cosmetics are used to maintain or manage an individual's skin health. For example, cosmetics may maintain skin moisture. The use of cosmetics with added functional ingredients is also increasing. In addition, cosmetics are produced in categories based on the user's skin type. Users' skin types may be categorized as oily, normal, or dry, and cosmetics suitable for each skin type are produced. Recently, skin damage caused by environmental pollution, such as ozone layer depletion and air pollution, as well as stress, has been on the rise, so users need to select and use cosmetics appropriate for their skin types.

However, most cosmetics sold on the market are mass-produced in cosmetics factories. This mass production may enable strict quality control by easily monitoring each manufacturing process and facilitate after-sales service in case of quality issues. However, mass production not only fails to satisfy the diverse purchasing needs of consumers, but also has limitations to proactively respond to their diverse needs. Furthermore, mass production makes it difficult to provide cosmetics optimized for specific consumer preferences or skin conditions. Therefore, a method is needed to provide customer-tailored cosmetics.

### [Disclosure]

### [Technical Problem]

The present disclosure aims to solve the aforementioned problems and other issues. The present disclosure also aims to provide customized cosmetics production equipment capable of automatically producing customized cosmetics of various formulations using a single piece of filling equipment.

The present disclosure also aims to provide customized cosmetics production equipment capable of automatically producing customized cosmetics of various formulations using cartridge replacement-type filling equipment.

The present disclosure also aims to provide customized cosmetics production equipment capable of simultaneously producing customized general cosmetics and customized functional cosmetics using filling equipment including one or more general cartridges and one or more functional cartridges.

### [Technical Solution]

According to one aspect of the present disclosure, there is provided customized cosmetics production equipment including: transfer equipment configured to transport a cosmetic container; filling equipment including a plurality of replaceable cartridges and configured to fill the cosmetic container with customized cosmetic raw materials of various formulations using the plurality of cartridges; and packaging equipment configured to cap the filled cosmetic container to produce customized cosmetics of various formulations.

More preferably, the customized cosmetics production equipment may further include pre-treatment equipment configured to generate, upon receipt of an order request from a consumer, first filling information for manufacturing customized cosmetics for the customer on the basis of customer information of the consumer. The pre-treatment equipment may be configured to generate an identification code including the first filling information and attach a label including the identification code to the cosmetic container.

More preferably, the filling equipment may further include an identification code reader configured to recognize an identification code attached to the cosmetic container. The identification code may be any one of a QR code, a micro QR code, a data matrix, and a 1D barcode. The first filling information may include information on the mixing ratio and discharge amount of raw materials constituting the customized cosmetics.

More preferably, each cartridge may include one or more fillers and a body frame configured to support the one or more fillers. The plurality of cartridges may be replaced according to formulations of the customized cosmetics to be manufactured.

More preferably, each filler may include a hopper configured to store cosmetic raw materials, a nozzle configured to inject the cosmetic raw materials into the cosmetic container, a connecting member configured to connect the hopper and the nozzle, and a sensor configured to measure a discharge amount of raw materials discharged from the nozzle.

More preferably, in a case where the customized cosmetics include customized general cosmetics and customized functional cosmetics, the plurality of cartridges may include one or more general cartridges and one or more functional cartridges.

More preferably, the pre-treatment equipment may be configured to generate, upon receipt of an order request from a consumer, second filling information for manufacturing the customized general cosmetics or customized functional cosmetics on the basis of customer information of the consumer.

More preferably, the second filling information may include information on the mixing ratio and discharge amount of general raw materials constituting the customized general cosmetics. In addition, the second filling information may include information on the mixing ratio and discharge amount of general raw materials and functional raw materials constituting the customized functional cosmetics.

More preferably, the general cartridge may include a plurality of fillers configured to provide at least one of a usability base, an efficacy base, a fragrance base, a thickening base, and a buffer base, and a body frame configured to support the plurality of fillers. The functional cartridge may include one or more fillers configured to provide a functional base, and a body frame configured to support the one or more fillers.

### [Advantageous Effects]

The advantages of customized cosmetics production equipment according to embodiments of the present disclosure are described as follows.

At least one of the embodiments of the present disclosure provides the advantage of automatically producing customized cosmetics of various formulations using a single piece of customized cosmetics production equipment by employing filling equipment including a plurality of cartridges that may be replaced by the equipment operator.

Furthermore, at least one of the embodiments of the present disclosure provides the advantage of simultaneously producing customized general cosmetics and customized functional cosmetics using a single piece of filling equipment by employing filling equipment including one or more general cartridges and one or more functional cartridges.

However, the advantages of the customized cosmetics production equipment according to embodiments of the present disclosure are not limited to those described above, and other advantages not mentioned will be readily apparent to those skilled in the art to which the present disclosure pertains from the description below.

### [Description of Drawings]

FIG. 1 is a diagram illustrating the configuration of a customized cosmetics sales system according to an embodiment of the present disclosure.
FIG. 2 is a flowchart illustrating a customized cosmetics sales process according to an embodiment of the present disclosure.
FIG. 3 is a diagram illustrating the configuration of customized cosmetics production equipment according to an embodiment of the present disclosure.
FIG. 4 is a diagram illustrating the configuration of filling equipment according to an embodiment of the present disclosure.
FIG. 5 is a diagram illustrating the shape of a cartridge included in the filling equipment in FIG. 4.
FIG. 6 is a diagram illustrating the configuration of a filler included in the cartridge in FIG. 5.
FIG. 7 is a diagram illustrating the configuration of filling equipment according to another embodiment of the present disclosure.
FIG. 8 is a diagram illustrating the shape of a cartridge included in the filling equipment in FIG. 7.
FIG. 9 is a diagram illustrating the configuration of a filler included in the cartridge in FIG. 8.

### [Mode for Invention]

Hereinafter, embodiments disclosed in the present specification will be described in detail with reference to the attached drawings and, regardless of the reference numerals, identical or similar components will be assigned the same reference numerals and redundant descriptions thereof will be omitted. In addition, in describing the embodiments disclosed in the present specification, detailed descriptions of related known technologies, which may obscure the subject matter of the embodiments, will be omitted. Furthermore, the accompanying drawings are only for easy understanding of the embodiments disclosed in the present specification, and the technical idea disclosed herein is not limited to the accompanying drawings. It should be understood that all changes, equivalents, and substitutes derived from each other technical concept of the present disclosure are included in the scope of the present disclosure.

The present disclosure proposes customized cosmetics production equipment capable of automatically producing customized cosmetics of various formulations using a single piece of filling equipment. Furthermore, the present disclosure proposes customized cosmetics production equipment capable of automatically producing customized cosmetics of various formulations using cartridge replacement-type filling equipment.

Hereinafter, various embodiments of the present disclosure will be described in detail with reference to the drawings.

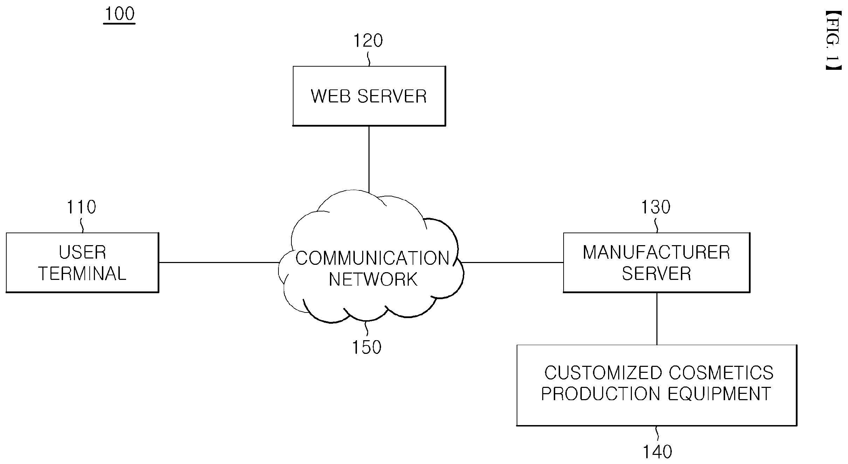

FIG. 1 is a diagram illustrating the configuration of a customized cosmetics sales system according to an embodiment of the present disclosure.

Referring to FIG. 1, a customized cosmetics sales system 100 according to an embodiment of the present disclosure may include a user terminal 110, a web server 120, a manufacturer server 130, customized cosmetics production equipment 140, and a communication network 150.

The user terminal 110, the web server 120, and the manufacturer server 130 may be connected to each other via the communication network 150. The communication network 150 may include wired and wireless networks, and specifically, may include various networks such as a Local Area Network (LAN), a Metropolitan Area Network (MAN), and a Wide Area Network (WAN). Furthermore, the communication network 150 may include the well-known World Wide Web (WWW). However, the communication network 150 according to the present disclosure is not limited to the networks listed above and may include at least one of a well-known wireless data network, a well-known telephone network, and a well-known wired/wireless television network.

The user terminal 110 may access the web server 120 and receive web services. That is, the user terminal 110 may receive a web page from the web server 120 and display it on a display unit. In this case, the web page may include a user interface for selling general cosmetics and/or customized cosmetics. Additionally, the web page may include a user interface for obtaining consumer's inquiry information through questionnaire responses.

Terminal users (i.e., consumers) may purchase general cosmetics and/or customized cosmetics through this web page. At this time, the terminal user may enter personal information, questionnaire response information, and product purchase information through the web page. The questionnaire response information may include information on whether to add functionality to the customized cosmetics.

The user terminal 110 may provide user information entered through the web page, such as personal information, questionnaire response information, and product purchase information of the terminal user, to the web server 120.

User terminals described herein may include mobile phones, smart phones, laptop computers, desktop computers, digital broadcasting terminals, personal digital assistants (PDAs), portable multimedia players (PMPs), navigation systems, slate PCs, tablet PCs, ultrabooks, wearable devices, and the like.

The web server 120 may provide web services related to cosmetics sales to the user terminal 110. That is, the web server 120 may create web pages for selling general cosmetics and/or customized cosmetics and provide the created web pages to the user terminal 110.

The web server 120 may obtain personal information, questionnaire response information, product purchase information, payment information, etc. of the terminal user from the user terminal 110. Furthermore, the web server 120 may store and manage the information obtained from the user terminal 110 in a database (DB).

The web server 120 may generate order information and invoice information for the terminal user on the basis of the product purchase information and payment information obtained from the user terminal 110.

The web server 120 may generate questionnaire information for the terminal user on the basis of the questionnaire response information of the terminal user. Here, the questionnaire information may include information regarding the terminal user's preferences, health status, skin condition, and whether additional functionality is to be added.

The web server 120 may provide customer information, including at least one of the terminal user's questionnaire information, order information, and invoice information, to the manufacturer server 130.

The manufacturer server 130 may store and manage the information obtained from the web server 120 in a database (DB). Although the present embodiment exemplifies the generation of the terminal user's questionnaire information, order information, and invoice information in the web server 120, the present disclosure is not necessarily limited thereto, and the manufacturer server 130 may also generate the terminal user's questionnaire information, order information, and invoice information.

The manufacturer server 130 may provide customer information, including at least one of the terminal user's questionnaire information, order information, and invoice information, to the customized cosmetics production equipment 140.

Although the present embodiment exemplifies that the server (i.e., the web server) operated by the cosmetics sales company and the server (i.e., the manufacturer server) operated by the cosmetics manufacturer are separately configured, the present disclosure is not necessarily limited thereto. Therefore, if the cosmetics manufacturer and cosmetics seller are the same, it will be apparent to those skilled in the art that the web server and manufacturer server may be configured as a single server.

The customized cosmetics production equipment 140 may automatically produce cosmetics tailored to the terminal user's preferences and/or skin condition, i.e., customized cosmetics, based on the customer information obtained from the manufacturer server 130.

The customized cosmetics production equipment 140 may generate filling information (i.e., recipe information) for producing customized cosmetics on the basis of the terminal user's customer information obtained from the manufacturer server 130 and generate an identification code (e.g., a 2D barcode such as a QR code, micro QR code, or data matrix, or a general 1D barcode) including the generated filling information. Here, the filling information may include information on the mixing ratio and discharge amount of the raw materials constituting the customized cosmetics. Furthermore, the filling information may include information on the mixing ratio and discharge amount of the raw materials constituting the customized general cosmetics. In addition, the filling information may include information on the mixing ratio and discharge amount of general raw materials and functional raw materials constituting the customized functional cosmetics.

The customized cosmetics production equipment 140 may attach a (unique) identification code of the terminal user or a label including the identification code to a cosmetic container, and automatically manufacture customized cosmetics for the user using the filling information included in the attached identification code.

The customized cosmetics production equipment 140 may automatically produce customized cosmetics of various formulations using a single piece of filling equipment including a plurality of cartridges that may be replaced by the equipment operator.

The customized cosmetics production equipment 140 may simultaneously produce customized general cosmetics and customized functional cosmetics using a single piece of filling equipment including both general and functional cartridges.

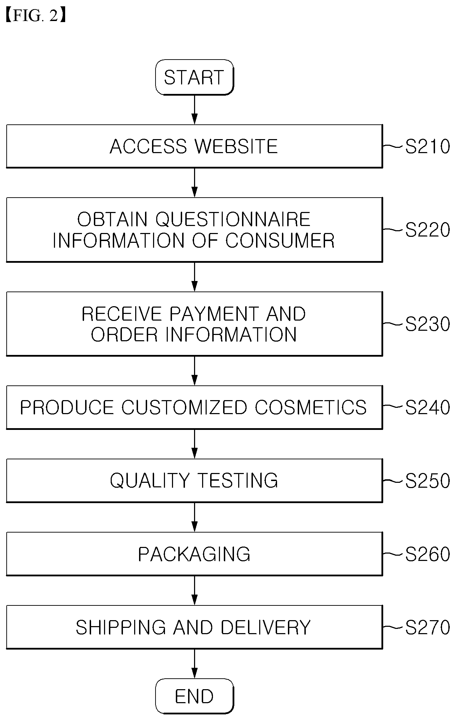

FIG. 2 is a flowchart illustrating a customized cosmetics sales process according to an embodiment of the present disclosure.

Referring to FIG. 2, the user terminal 110 may access a website provided by the web server 120 (S210). Here, the website may include a cosmetics sales site operated by a cosmetics manufacturer or cosmetics sales company.

The user terminal 110 may receive a web page from the website and display the received web page on a display unit. The terminal user may purchase general cosmetics and/or customized cosmetics through the web page displayed on the user terminal 110.

When the terminal user wishes to purchase customized cosmetics, the web server 120 may provide a web page including questionnaire information for interviewing the user to the user terminal 110. The questionnaire information may include multiple questions related to the terminal user's preferences, health, skin condition, and whether additional functionality is required.

The user terminal 110 may provide the web server 120 with questionnaire response information entered through the web page. Based on the questionnaire response information received from the user terminal 110, the web server 120 may obtain questionnaire information including the terminal user's preferences, health, skin condition, and whether additional functionality is required (S220).

Thereafter, once payment for the customized cosmetics has been made, the web server 120 may receive order information for the customized cosmetics from the user terminal 110 (S230). That is, the web server 120 may obtain, from the user terminal 110, product purchase information and payment information of the terminal user. The web server 120 may generate order information and invoice information for the terminal user on the basis of the information obtained from the user terminal 110.

The web server 120 may provide customer information, including at least one of the terminal user's questionnaire information, order information, and invoice information, to the manufacturer server 130. The manufacturer server 130 may store the information obtained from the web server 120 in a database and provide the information to the customized cosmetics production equipment 140.

The customized cosmetics production equipment 140 may generate filling information for manufacturing customized cosmetics on the basis of the terminal user's customer information obtained from the manufacturer server 130 and generate an identification code (e.g., a 2D barcode such as a QR code, micro QR code, or data matrix, or a general 1D barcode) including the filling information.

The customized cosmetics production equipment 140 may attach the terminal user's identification code or a label including the identification code to a cosmetic container and automatically produce customized cosmetics using the filling information included in the identification code (S240).

When manufacturing of the customized cosmetics is complete, quality testing may be performed on the customized cosmetics using a quality testing device installed in the relevant facility 140 or a separate quality testing device (S250).

If the customized cosmetics pass the quality test, the customized cosmetics may be packaged in a cosmetics box (S260). Subsequently, the invoice number assigned to the terminal user may be attached to the cosmetics box, and then the box may be delivered to a delivery company (S270). The delivery company then delivers the customized cosmetics to the terminal user's address.

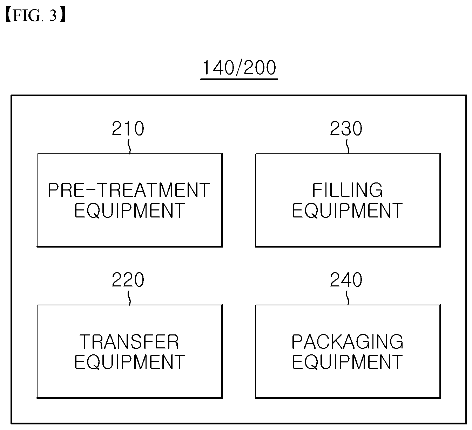

FIG. 3 is a diagram illustrating the configuration of customized cosmetics production equipment according to an embodiment of the present disclosure.

Referring to FIG. 3, customized cosmetics production equipment 200 according to an embodiment of the present disclosure may include pre-treatment equipment 210, transfer equipment 220, filling equipment 230, and packaging equipment 240.

The pre-treatment equipment 210 may receive a consumer's cosmetics order request from the manufacturer server 130. At this time, the pre-treatment equipment 210 may receive customer information, including at least one of consumer's questionnaire information, order information, and invoice information, from the manufacturer server 130. The questionnaire information may include information regarding whether functionality is to be added to cosmetics.

The pre-treatment equipment 210 may generate filling information for manufacturing customized cosmetics for the user on the basis of the terminal user's customer information. Here, the filling information may include information on the mixing ratio and discharge amount of the raw materials constituting the customized cosmetics. Furthermore, the filling information may include information on the mixing ratio and discharge amount of the raw materials constituting the customized general cosmetics. In addition, the filling information may include information on the mixing ratio and discharge amount of general raw materials and functional raw materials constituting the customized functional cosmetics.

The pre-treatment equipment 210 may generate an identification code including the consumer's filling information. Here, the identification code may include invoice information and other information, in addition to the filling information. Additionally, a 2D barcode, such as a QR code, micro QR code, or data matrix, or a general 1D barcode may be used as the identification code, and more preferably, a QR code may be used as the identification code.

The pre-treatment equipment 210 may output a label including the consumer's identification code information and attach the output label to the cosmetic container. The label may include, in addition to the consumer's identification code information, customer identification (ID) information, a recipe code, and product information. The recipe code may include filling information.

The transfer equipment 220 may include a plurality of transfer holders for holding cosmetic containers with attached labels. The transfer equipment 220 may move the cosmetic containers mounted on respective transfer holders toward the filling equipment 230. Typically, a conveyor belt may be used as the transfer equipment 220, but the present disclosure is not necessarily limited thereto.

The filling equipment 230 may recognize the identification code attached to each cosmetic container using an identification code reader. The filling equipment 230 may automatically fill a cosmetic container with customized cosmetic raw materials corresponding to the filling information included in the identification code.

Meanwhile, as another embodiment, the filling equipment 230 may recognize the recipe code attached to each cosmetic container using an identification code reader. The filling equipment 230 may automatically fill a cosmetic container with customized cosmetic raw materials corresponding to the filling information included in the recipe code.

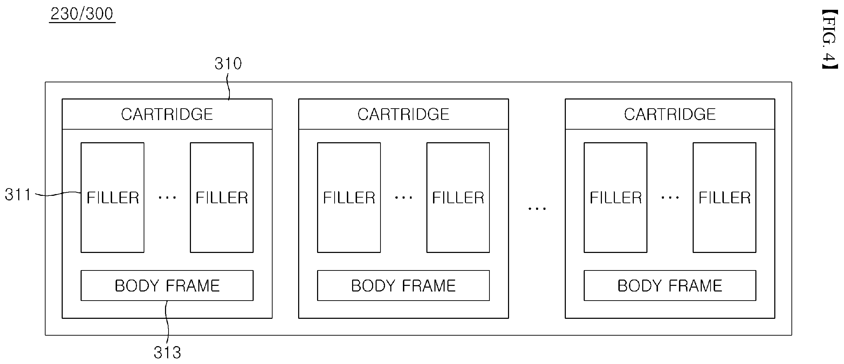

The filling equipment 230 may automatically fill a cosmetic container with customized cosmetic raw materials of various formulations using a plurality of replaceable cartridges. The filling equipment 230 will be described in more detail later with reference to FIGS. 4 to 6.

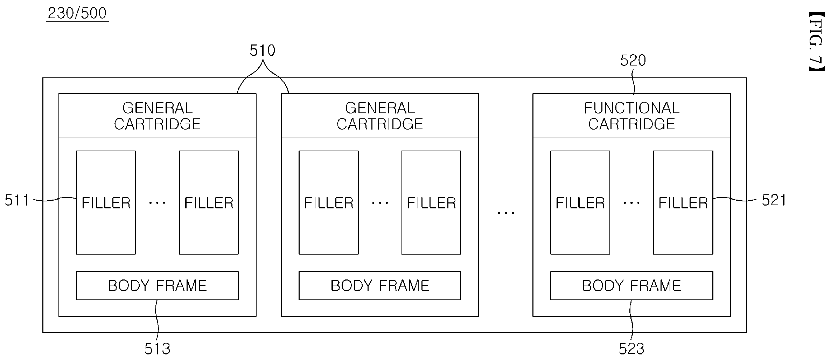

Meanwhile, as another embodiment, the filling equipment 230 may automatically fill a cosmetic container with at least one of a general raw material and a functional raw material using one or more general cartridges and one or more functional cartridges. The filling equipment 230 will be described in more detail later with reference to FIGS. 7 to 9.

The packaging equipment 240 may cap a cosmetic container filled with consumer's customized cosmetic raw materials and rotate the capped cosmetic container at a predetermined speed or higher to mix the contents of the cosmetic container. Furthermore, the packaging equipment 240 may automatically package the cosmetic container by placing it in a cosmetic box.

As described above, the customized cosmetics production equipment according to an embodiment of the present disclosure may automatically produce customized cosmetics of various formulations using a single piece of filling equipment with replaceable cartridges. Furthermore, the customized cosmetics production equipment may simultaneously produce customized general cosmetics and customized functional cosmetics using filling equipment including one or more general cartridges and one or more functional cartridges.

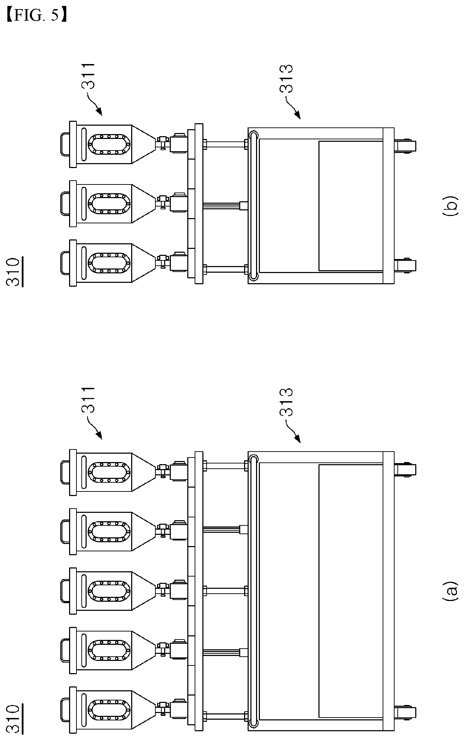

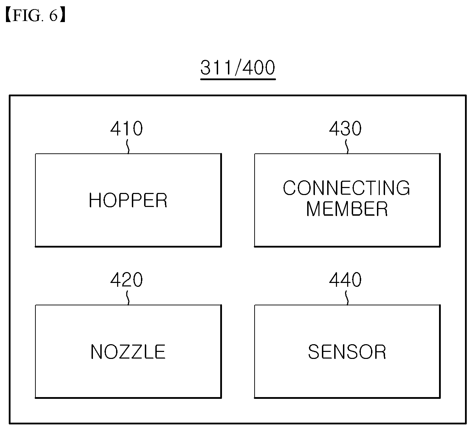

FIG. 4 is a diagram illustrating the configuration of filling equipment according to an embodiment of the present disclosure, FIG. 5 is a diagram illustrating the shape of a cartridge included in the filling equipment in FIG. 4, and FIG. 6 is a diagram illustrating the configuration of a filler included in the cartridge in FIG. 5.

Referring to FIGS. 4 to 6, filling equipment 300 according to an embodiment of the present disclosure may include a plurality of cartridges 310 for filling a cosmetic container with customized cosmetic raw materials.

The plurality of cartridges 310 may be configured to be replaceable by the equipment operator. At least one of the plurality of cartridges 310 may be replaced depending on the formulation (i.e., type) of the customized cosmetics to be manufactured.

Each cartridge 310 may include one or more fillers 311 and a body frame 313 supporting the one or more fillers 311. For example, as illustrated in FIG. 5, the cartridge 310 may be configured as a 5-nozzle cartridge or a 3-nozzle cartridge, but is not necessarily limited thereto.

Each cartridge 310 may be configured in an assembling form. For example, a 5-nozzle cartridge and a 3-nozzle cartridge may be combined to form a new 8-nozzle cartridge. Furthermore, a 5-nozzle cartridge may be disassembled to form a 3-nozzle cartridge and a 2-nozzle cartridge.

One or more fillers 311 may include one or more fillers for providing a usability base, one or more fillers for providing an efficacy base, one or more fillers for providing a fragrance base, one or more fillers for providing a thickening base, and one or more fillers for providing a buffer base.

Each filler 311 or 400 may include a hopper 410 for storing cosmetic raw materials, a nozzle 420 for injecting the cosmetic raw materials into a cosmetic container, a connecting member 430 connecting the hopper 410 and the nozzle 420, and a sensor 440 for measuring the discharge amount of raw materials discharged from the nozzle 420. Meanwhile, although not shown in the drawing, each filler 311 or 400 may further include a sensor for measuring the amount of raw materials present in the hopper 410.

Each filler 400 may fill a cosmetic container with a predetermined amount of raw materials according to a control command from a control device (not shown). At this time, the amount of raw materials injected into the cosmetic container may be determined based on filling information included in the consumer's identification code.

The filling equipment 300 having the configuration described above may automatically produce customized cosmetics of various formulations using a plurality of replaceable cartridges 310. Formulations of the customized cosmetics include, but are not limited to, shampoo, essence, moisturizer, treatment, lotion, and cleanser.

General cosmetics or customized cosmetics contain different types of raw materials depending on the product type (i.e., formulation). For example, a shampoo may contain raw material type a, which provides a usability base, raw material type b, which provides an efficacy base, raw material type c, which provides a fragrance base, raw material type d, which provides a thickening base, and raw material type e, which provides a buffer base. An essence may contain raw material type f, which provides a usability base, raw material type g, which provides an efficacy base, and raw material type h, which provides a fragrance base. A moisturizer may contain raw material type i, which provides a usability base, raw material type j, which provides an efficacy base, and raw material type k, which provides a fragrance base. A hair treatment may contain raw material type 1, which provides a usability base, raw material type m, which provides an efficacy base, and raw material type n, which provides a fragrance base. Here, a to n are natural numbers.

When manufacturing customized cosmetics of a specific formulation among various customized cosmetics formulations described above, the cartridges of the filling equipment 230 or 300 may be replaced with a plurality of cartridges required to manufacture the customized cosmetics of the corresponding formulation without the need to replace other equipment 210, 220, and 240 of the customized cosmetics production equipment 200.

The filling equipment 300 may fill the cosmetic container with the cosmetic raw materials of the corresponding formulation using the replaced cartridges 310. For example, if the customized cosmetics to be manufactured are shampoos, the filling equipment 300 may fill the cosmetic container with the cosmetic raw materials of the corresponding formulation using a plurality of cartridges containing the aforementioned raw material of type A (= a + b + c + d + e). If the customized cosmetics to be manufactured are essences, the filling equipment 300 may fill the cosmetic container with the cosmetic raw materials of the corresponding formulation using a plurality of cartridges containing the aforementioned raw material of type B (= f + g + h). If the customized cosmetics to be manufactured are moisturizers, the filling equipment 300 may fill the cosmetic container with the cosmetic raw materials of the corresponding formulation using a plurality of cartridges containing the aforementioned raw material of type C (= i + j + k). If the customized cosmetics to be manufactured are hair treatments, the filling equipment 300 may fill the cosmetic container with the cosmetic raw materials of the corresponding formulation using a plurality of cartridges containing the aforementioned raw material of type D (= 1 + m + n). In this way, the filling equipment 300 may automatically fill the cosmetic container with the customized cosmetic raw materials of various formulations using a plurality of cartridges that may be replaced by the equipment operator.

Although not shown in the drawing, the filling equipment 300 may further include an identification code reader for recognizing an identification code attached to each cosmetic container, and a raw-material injection device for automatically injecting cosmetic raw materials into the hopper of each filler. The raw-material injection device may automatically inject corresponding cosmetic raw materials into the hopper of each filler according to a control command from the control device when the remaining amount of raw material in each hopper falls below a threshold.

As described above, the filling equipment according to an embodiment of the present disclosure may automatically produce customized cosmetics of various formulations using a plurality of cartridges that may be replaced by the equipment operator.

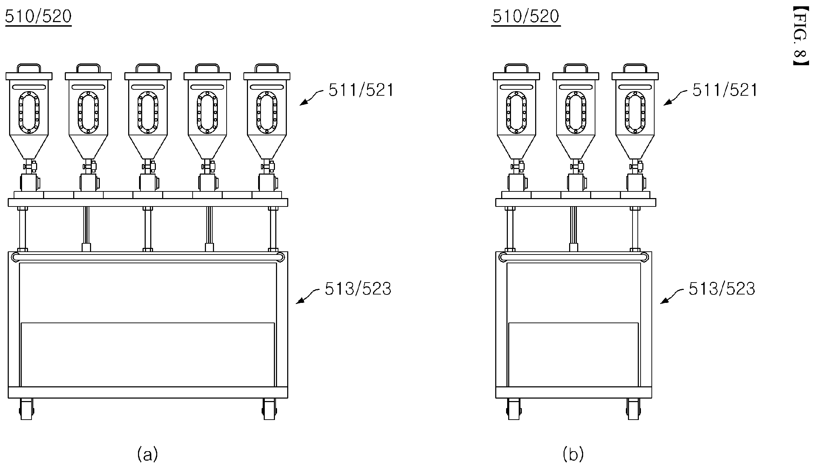

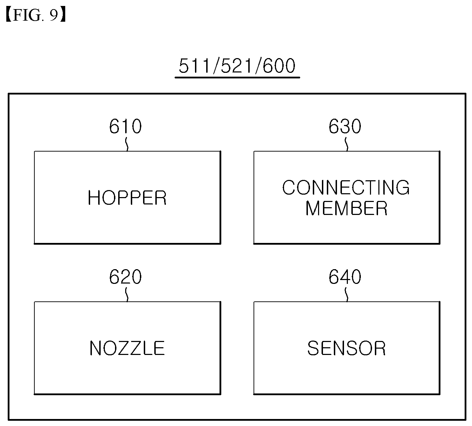

FIG. 7 is a diagram illustrating the configuration of filling equipment according to another embodiment of the present disclosure, FIG. 8 is a diagram illustrating the shape of a cartridge included in the filling equipment in FIG. 7, and FIG. 9 is a diagram illustrating the configuration of a filler included in the cartridge in FIG. 8.

Referring to FIGS. 7 to 9, filling equipment 500 according to another embodiment of the present disclosure may include a plurality of cartridges 510 and 520 for filling a cosmetic container with customized cosmetic raw materials.

The plurality of cartridges 510 and 520 may include one or more general cartridges 510 and one or more functional cartridges 520. Meanwhile, according to the embodiment of the present disclosure, the plurality of cartridges 510 and 520 may be configured to be replaceable by a system operator.

The general cartridge 510 may include one or more fillers 511 for filling general (cosmetic) raw materials and a body frame 513 supporting the one or more fillers 511. For example, as illustrated in FIG. 8, the general cartridge 510 may be configured as a 5-nozzle cartridge or a 3-nozzle cartridge, but is not necessarily limited thereto.

The general cartridge 510 may be configured in an assembling form. For example, a 5-nozzle cartridge and a 3-nozzle cartridge may be combined to form a new 8-nozzle cartridge. Furthermore, a 5-nozzle cartridge may be disassembled to form a 3-nozzle cartridge and a 2-nozzle cartridge.

The fillers 511 of the general cartridge 510 may include one or more fillers for providing a usability base, one or more fillers for providing an efficacy base, one or more fillers for providing a fragrance base, one or more fillers for providing a thickening base, and one or more fillers for providing a buffer base.

The functional cartridge 520 may include one or more fillers 521 for filling functional (cosmetic) raw materials and a body frame 523 supporting the one or more fillers 521. Similarly, as illustrated in FIG. 8, the functional cartridge 510 may be configured as a 5-nozzle cartridge or a 3-nozzle cartridge, but is not necessarily limited thereto.

The functional cartridge 520 may also be configured in an assembling form. For example, a 5-nozzle cartridge and a 3-nozzle cartridge may be combined to form a new 8-nozzle cartridge. In addition, a 5-nozzle cartridge may be disassembled to form a 3-nozzle cartridge and a 2-nozzle cartridge.

The fillers 521 of the functional cartridge 520 may include one or more fillers to provide a functional base.

Each filler 511, 521, or 600 may include a hopper 610 for storing cosmetic raw materials, a nozzle 620 for injecting cosmetic raw materials into a cosmetic container, a connecting member 630 connecting the hopper 610 and the nozzle 620, and a sensor 640 for measuring the discharge amount of raw materials discharged from the nozzle 620. Although not illustrated in the drawing, each filler 511, 521, or 600 may further include a sensor for measuring the amount of raw materials present in the hopper 610.

Each filler 600 may fill a cosmetic container with a predetermined amount of raw materials according to a control command from a control device (not shown). At this time, the amount of general raw materials and functional raw materials injected into the cosmetic container may be determined based on filling information included in the consumer's identification code.

The filling equipment 500 having the configuration described above may simultaneously produce customized general cosmetics and customized functional cosmetics using the general cartridge 510 and the functional cartridge 520.

Customized functional cosmetics are cosmetics obtained by adding functional raw materials to the raw materials of customized general cosmetics. For example, a general shampoo may include raw materials that provide a usability base, raw materials that provide an efficacy base, raw materials that provide a fragrance base, raw materials that provide a thickening base, and raw materials that provide a buffer base. Meanwhile, a functional shampoo may include raw materials that provide a usability base, raw materials that provide an efficacy base, raw materials that provide a fragrance base, raw materials that provide a thickening base, raw materials that provide a buffer base, and raw materials that provide a functional base. The functional base may include, but is not limited to, a hair loss treatment base or a dandruff treatment base.

The filling equipment 500 may fill the cosmetic container with at least one of general raw materials and functional raw materials using one or more general cartridges 510 and one or more functional cartridges 520. For example, if the customized cosmetics to be manufactured are general shampoos, the filling equipment 300 may fill the cosmetic container with general raw materials using a plurality of general cartridges containing a general raw material of type A. Meanwhile, if the customized cosmetics to be manufactured are functional shampoos, the filling equipment 500 may fill the cosmetic container with general raw materials and functional raw materials using a plurality of general cartridges containing a general raw material of type A and a functional cartridge storing one type of functional raw material. In this way, the filling equipment 500 may automatically fill the cosmetic container with at least one of general raw materials and functional raw materials using one or more general cartridges and one or more functional cartridges.

Although not shown in the drawing, the filling equipment 500 may further include an identification code reader for recognizing the identification code attached to each cosmetic container and a raw-material injection device for automatically injecting cosmetic raw materials into the hopper of each filler. The raw-material injection device may automatically inject the corresponding cosmetic raw materials into the hopper of each filler according to a control command from the control device when the remaining amount of raw material in each hopper falls below a threshold.

As described above, the filling equipment according to another embodiment of the present disclosure may automatically produce not only customized general cosmetics but also customized functional cosmetics using one or more general cartridges and one or more functional cartridges.

While specific embodiments of the present disclosure have been described above, various modifications are possible without departing from the scope of the present disclosure. Therefore, the scope of the present disclosure is not limited to the described embodiments, but should be defined not only by the claims described below but also by equivalents thereof.

## Claims

1. Customized cosmetics production equipment comprising:
transfer equipment configured to transport a cosmetic container;
filling equipment comprising a plurality of replaceable cartridges and configured to fill the cosmetic container with customized cosmetic raw materials of various formulations using the plurality of cartridges; and
packaging equipment configured to cap the filled cosmetic container to produce customized cosmetics of various formulations.

2. The customized cosmetics production equipment of claim 1,
further comprising pre-treatment equipment configured to generate, upon receipt of an order request from a consumer, first filling information for manufacturing customized cosmetics for the customer on the basis of customer information of the consumer.

3. The customized cosmetics production equipment of claim 2,
wherein the pre-treatment equipment is configured to generate an identification code including the first filling information and attach a label including the identification code to the cosmetic container.

4. The customized cosmetics production equipment of claim 3,
wherein the identification code is any one of a QR code, a micro QR code, a data matrix, and a 1D barcode.

5. The customized cosmetics production equipment of claim 2,
wherein the first filling information comprises information on a mixing ratio and discharge amount of raw materials constituting the customized cosmetics.

6. The customized cosmetics production equipment of claim 1,
wherein the filling equipment further comprises an identification code reader configured to recognize an identification code attached to the cosmetic container.

7. The customized cosmetics production equipment of claim 1,
wherein each cartridge comprises one or more fillers and a body frame configured to support the one or more fillers.

8. The customized cosmetics production equipment of claim 7,
wherein each filler comprises a hopper configured to store cosmetic raw materials, a nozzle configured to inject the cosmetic raw materials into the cosmetic container, a connecting member configured to connect the hopper and the nozzle, and a sensor configured to measure a discharge amount of raw materials discharged from the nozzle.

9. The customized cosmetics production equipment of claim 1,
wherein at least one of the plurality of cartridges is replaced according to formulations of the customized cosmetics to be manufactured.

10. The customized cosmetics production equipment of claim 1,
wherein in a case where the customized cosmetics comprise customized general cosmetics and customized functional cosmetics,
the plurality of cartridges comprise one or more general cartridges and one or more functional cartridges.

11. The customized cosmetics production equipment of claim 10,
wherein the pre-treatment equipment is configured to generate, upon receipt of an order request from a consumer, second filling information for manufacturing the customized general cosmetics or customized functional cosmetics on the basis of customer information of the consumer.

12. The customized cosmetics production equipment of claim 11,
wherein the second filling information comprises information on a mixing ratio and discharge amount of general raw materials constituting the customized general cosmetics.

13. The customized cosmetics production equipment of claim 11,
wherein the second filling information comprises information on a mixing ratio and discharge amount of general raw materials and functional raw materials constituting the customized functional cosmetics.

14. The customized cosmetics production equipment of claim 10,
wherein the general cartridge comprises a plurality of fillers configured to provide at least one of a usability base, an efficacy base, a fragrance base, a thickening base, and a buffer base, and a body frame configured to support the plurality of fillers.

15. The customized cosmetics production equipment of claim 10,
wherein the functional cartridge comprises one or more fillers configured to provide a functional base, and a body frame configured to support the one or more fillers.
